(19) Europäisches Patentamt
European Patent Office
Office européen des brevets

(11) EP 2 437 334 A1

(12) **EUROPEAN PATENT APPLICATION**
published in accordance with Art. 153(4) EPC

(43) Date of publication:
**04.04.2012 Bulletin 2012/14**

(21) Application number: **10780684.6**

(22) Date of filing: **26.05.2010**

(51) Int Cl.:
***H01M 4/1391*** *(2010.01)* ***H01M 4/131*** *(2010.01)*
***H01M 4/505*** *(2010.01)* ***H01M 4/525*** *(2010.01)*
***H01M 4/62*** *(2006.01)* ***H01M 10/052*** *(2010.01)*
***H01M 10/0567*** *(2010.01)*

(86) International application number:
**PCT/JP2010/059299**

(87) International publication number:
**WO 2010/137730 (02.12.2010 Gazette 2010/48)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **27.05.2009 JP 2009127497**

(71) Applicant: **Sumitomo Chemical Company, Limited**
**Tokyo 104-8260 (JP)**

(72) Inventors:
- **YAMAGUCHI, Takitaro**
**Ryugasaki-shi**
**Ibaraki 301-0032 (JP)**
- **KAGEURA, Jun-ichi**
**Tsukuba-shi**
**Ibaraki 305-0821 (JP)**

(74) Representative: **Brunetti, Fabrizio et al**
**Cabinet Beau de Loménie**
**158, rue de l'Université**
**75340 Paris Cedex 07 (FR)**

# (54) ELECTRODE MIX, ELECTRODE, AND NON-AQUEOUS ELECTROLYTE SECONDARY BATTERY

(57) An electrode mixture comprising a lithium nickel manganese composite metal oxide having an average particle diameter of 1 μm or less, an electrically conductive material and an overcharge inhibition material. The electrode mixture in which the overcharge inhibition material is an aromatic compound. The electrode mixture in which the overcharge inhibition material is one or more members selected from the group consisting of an aramid, a polyether, a polysulfone and a polyethersulfone. An electrode comprising the electrode mixture. A non-aqueous electrolyte secondary battery comprising a positive electrode, a negative electrode capable of being doped and dedoped with lithium ions, a separator and a nonaqueous electrolytic solution, wherein the positive electrode is the electrode described above.

EP 2 437 334 A1

## Description

### TECHNICAL FIELD

The present invention relates to an electrode mixture, an electrode, and a nonaqueous electrolyte secondary battery. More specifically, the present invention relates to an electrode mixture usable for an electrode of a nonaqueous electrolyte secondary battery.

### BACKGROUND ART

A nonaqueous electrolyte secondary battery such as a lithium secondary battery is a secondary battery having a positive electrode, a negative electrode, a separator, and a nonaqueous electrolytic solution as main components, and it has already been put into practical use as small-size power sources for portable telephones, notebook-sized personal computers, and the like, and further is being attempted to be applied in large-size power sources of automobiles, electric power storages, and the like.

When a nonaqueous electrolyte secondary battery is in an state in which a voltage is beyond a predetermined voltage (specified voltage), that is, in an overcharge state, during charging, an excessive amount of lithium ions are dedoped from a positive electrode, or a negative electrode is doped with an excessive amount of lithium ions, which may cause abnormal operations such as heat generation and deformation. In order to inhibit such abnormal operations during charging, it is known that an overcharge inhibition material is used. The overcharge inhibition material is decomposed and/or polymerized due to the voltage in the overcharge state mentioned above, as a result, a film is formed on the surface of the electrode. The formation of the film inhibits an abnormal operation of the secondary battery. As the overcharge inhibition material, various kinds of aromatic compounds are known (see, for example, JP 7-302614 A and JP 9-106835 A). Such overcharge inhibition materials are usually used in a state in which it is added to the nonaqueous electrolytic solution in a small amount.

On the other hand, a nonaqueous electrolyte secondary battery used for automobiles is required to have high power. As positive electrode active materials constituting the positive electrode of the secondary battery, a lithium nickel manganese composite metal oxide is often used. In order to further enhance the output of the secondary battery, as the oxide, for example, fine particulate oxide of about 1 μm or less may be used. In this case, however, even if the overcharge inhibition material is added and used for the nonaqueous electrolytic solution as usual, there is room for improvement from the viewpoint of inhibiting an abnormal operation of the nonaqueous electrolyte secondary battery. Furthermore, when a large amount of the overcharge inhibition materials are added, it cannot be said that the high-power characteristics are sufficient.

### DISCLOSURE OF THE INVENTION

An object of the present invention is to provide a nonaqueous electrolyte secondary battery capable of inhibiting an abnormal operation without damaging high-power characteristics, as well as to provide an electrode mixture and an electrode which are suitable for the nonaqueous electrolyte secondary battery.

The present invention provides the following means.

<1> An electrode mixture including a lithium nickel manganese composite metal oxide having an average particle diameter of 1 μm or less, an electrically conductive material and an overcharge inhibition material.

<2> The electrode mixture according to <1>, wherein the lithium nickel manganese composite metal oxide is represented by the following formula (1):

$$Li_z(Ni_{1-(x+y)}Mn_xM_y)O_2 \qquad (1)$$

wherein, x is more than 0 and less than 1, y is 0 or more and less than 1, x+y is more than 0 and less than 1, z is 0.5 or more and 1.5 or less; M is one or more elements selected from the group consisting of Co, Al, B, Ti, Mg and Fe.

<3> The electrode mixture according to <1> or <2>, wherein the overcharge inhibition material is an aromatic compound.

<4> The electrode mixture according to any one of <1> to <3>, wherein the overcharge inhibition material is one or more members selected from the group consisting of an aramid, a polyether, a polysulfone and a polyethersulfone.

<5> The electrode mixture according to any one of <1> to <4>, wherein the electrically conductive material is a carbonaceous material.

<6> The electrode mixture according to any one of <1> to <5>, further including a binder or an organic solvent or both.

<7> The electrode mixture according to <6>, wherein the viscosity thereof is 2000 mPa·s or more and 10000 mPa·s

or less.

<8> An electrode including the electrode mixture according to any one of <1> to <7>.

<9> A nonaqueous electrolyte secondary battery including a positive electrode, a negative electrode capable of being doped and dedoped with lithium ions, a separator and a nonaqueous electrolytic solution, wherein the positive electrode is the electrode according to <8>.

<10> The nonaqueous electrolyte secondary battery according to <9>, wherein the nonaqueous electrolytic solution contains an overcharge inhibition material.

<11> The nonaqueous electrolyte secondary battery according to <10>, wherein the overcharge inhibition material contained in the nonaqueous electrolytic solution is an aromatic compound.

<12> The nonaqueous electrolyte secondary battery according to <10> or <11>, wherein the overcharge inhibition material contained in the nonaqueous electrolytic solution is one or more members selected from the group consisting of a diphenyl ether, a derivative of a diphenyl ether, a diphenyl sulfone and a derivative of a diphenyl sulfone.

<13> The nonaqueous electrolyte secondary battery according to any one of <9> to <12>, wherein the separator is made of a porous film and a heat resistant porous layer laminated thereon.

## MODE FOR CARRYING OUT THE INVENTION

<Electrode Mixture of the Present Invention>

The electrode mixture of the present invention includes a lithium nickel manganese composite metal oxide having an average particle diameter of 1 μm or less, an electrically conductive material, and an overcharge inhibition material. When the electrode mixture of the present invention is used for a positive electrode of a nonaqueous electrolyte secondary battery, the resultant nonaqueous electrolyte secondary battery is excellent in the output characteristics, and can inhibit the abnormal operation. The lithium nickel manganese composite metal oxide acts as a positive electrode active material in the nonaqueous electrolyte secondary battery. When extremely fine lithium nickel manganese composite metal oxide having an average particle diameter of 1 μm or less is used for the nonaqueous electrolyte secondary battery, only with the addition of a small amount of the overcharge inhibition material to the nonaqueous electrolytic solution, the effect of the overcharge inhibition material is not sufficient. More specifically, the effect, in which the overcharge inhibition material is decomposed and/or polymerized due to a voltage at the time of over-charging, resulting in formation of a film on the surface of the electrode, is not sufficient. Furthermore, when the addition amount of the overcharge inhibition material to the nonaqueous electrolytic solution is increased from the viewpoint that the lithium nickel manganese composite metal oxide is extremely fine, in other words, the specific surface area is large, the high-power characteristics of the secondary battery, which are to be obtained, cannot be obtained. However, the present invention makes it possible to achieve a nonaqueous electrolyte secondary battery satisfying the both properties, that is, a nonaqueous electrolyte secondary battery capable of inhibiting an abnormal operation and having high power.

<Lithium Nickel Manganese Composite Metal Oxide in the Present Invention>

In the electrode mixture of the present invention, a lithium nickel manganese composite metal oxide has an average particle diameter of 1 μm or less, and preferably 0.8 μm or less. Furthermore, the lower limit of the average particle diameter of the oxide is usually 0.01 μm or more and preferably 0.05 μm or more. The lithium nickel manganese composite metal oxide is usually composed of primary particles and secondary particles formed by aggregation of the primary particles. The average particle diameter in the present invention signifies the average value of the primary particle diameters, and the particle diameter can be measured by observing with a scanning electron microscope (hereinafter, may be also referred to as SEM). The specific measurement method is described later.

In the electrode mixture of the present invention, the lithium nickel manganese composite metal oxide is preferably represented by the following formula (1).

$$Li_z(Ni_{1-(x+y)}Mn_xM_y)O_2 \qquad (1)$$

wherein, x is more than 0 and less than 1, y is 0 or more and less than 1, x+y is more than 0 and less than 1, z is 0.5 or more and 1.5 or less. M is one or more elements selected from the group consisting of Co, Al, B, Ti, Mg and Fe.

In the formula (1), x is preferably 0.3 or more and less than 1, more preferably 0.3 or more and 0.9 or less, and further preferably 0.3 or more and 0.6 or less. Furthermore, y is preferably 0 or more and 0.5 or less, and more preferably 0 or more and 0.3 or less. Furthermore, x+y is preferably 0.3 or more and less than 1, more preferably 0.3 or more and 0.9 or less, and further preferably 0.3 or more and 0.6 or less. The preferable value of z is 0.95 or more and 1.5 or less, and more preferably 1.0 or more and 1.4 or less. When x, y, and z are within such ranges, the secondary battery characteristics can be further enhanced.

In the formula (1), it is preferable that M be Co or Fe or both from the viewpoint of enhancing the capacity of the resultant battery. Furthermore, from the viewpoint of enhancing the output characteristics of the battery at a high current rate, that is, the rate characteristics of the battery, M is preferably Fe. When M is Fe, y is preferably 0.001 or more and 0.5 or less, more preferably 0.01 or more and 0.3 or less, and furthermore preferably 0.01 or more and 0.1 or less.
It is preferable that in the lithium nickel manganese composite metal oxide, the crystal structure be an $\alpha$-$NaFeO_2$ type crystal structure, that is, a crystal structure belonging to the R-3m space group. The crystal structure can be identified from a powder X-ray diffraction diagram obtained by using CuK$\alpha$ as a radiation source.

<Production Example of Lithium Nickel Manganese Composite Metal Oxide>

Production Example of the lithium nickel manganese composite metal oxide is described below. Specifically, Production Example including the following steps (1), (2) and (3) in this order can be employed.

(1)A step of bringing an aqueous solution containing Ni, Mn, and Cl, and M if necessary into contact with alkali so as to obtain a coprecipitated slurry.
(2)A step of obtaining a coprecipitate from the coprecipitated slurry.
(3) The step of calcining a mixture obtained by mixing the coprecipitate and a lithium compound, and an inactive flux if necessary, while maintaining the temperature at less than 900°C so as to obtain a lithium nickel manganese composite metal oxide.

In the step (1), the aqueous solution containing Ni, Mn, and Cl, and M if necessary can be obtained by, for example, weighing a chloride of Ni and a chloride of Mn, and a chloride of M if necessary so that the molar ratio of Ni : Mn : M is (1-(x+y)) : x : y, and dissolving them in water. When M is Fe, a chloride of Fe is preferably a chloride of divalent Fe. Furthermore, when each raw material containing each of Ni, Mn, and M is not easily dissolved in water, when, for example, the raw material is oxide, hydroxide, or metal material, an aqueous solution containing Ni, Mn, and Cl, and M if necessary can be obtained by dissolving the raw materials in an aqueous solution containing hydrochloric acid.
In the step (1), examples of alkali may include one or more compounds selected from the group consisting of LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate), and $(NH_4)_2CO_3$ (ammonium carbonate). These compounds may be anhydride or hydrate. In the step (1), it is preferable to use these alkalis as an alkaline aqueous solution by dissolving these alkalis in water. Examples of the alkaline aqueous solution may include aqueous ammonia. The concentration of alkali in the alkaline aqueous solution is usually around from 0.5 to 10 M (mol/L), and preferably around from 1 to 8 M (mol/L). Furthermore, from the viewpoint of the production cost, it is preferable that the alkali to be used be anhydride and/or hydrate of NaOH or KOH. Furthermore, two or more of these alkalis may be used.
Examples of the contacting method in the step (1) may include a method of adding an alkaline aqueous solution to the aqueous solution containing Ni, Mn, and Cl, and M if necessary and mixing thereof; a method of adding the aqueous solution containing Ni, Mn, and Cl, and M if necessary to an alkaline aqueous solution and mixing thereof; a method of adding the aqueous solution containing Ni, Mn, and Cl, and M if necessary and an alkaline aqueous solution to water and mixing thereof. It is preferable that these mixing operations be carried out by stirring. Among the contacting methods, in particular, it is preferable to employ the method of adding the aqueous solution containing Ni, Mn, and Cl, and M if necessary to an alkaline aqueous solution and mixing thereof because the change in pH is easily held. In this case, as the aqueous solution containing Ni, Mn, and Cl, and M if necessary is added and mixed to an alkaline aqueous solution, the pH of the mixed solution is accordingly decreased. While adjusting the pH of the mixed solution at 9 or more, and preferably at 10 or more, the aqueous solution containing Ni, Mn, and Cl, and M if necessary may be added. It is preferable that while an aqueous solution of any one or both of the aqueous solution containing Ni, Mn, and Cl, and M if necessary and the alkaline aqueous solution is maintained at the temperature of 40°C to 80°C, the aqueous solutions be brought into contact with each other. Thus, the coprecipitate having more uniform composition can be obtained. In the step (1), as mentioned above, a coprecipitate can be formed and a coprecipitate slurry can be obtained.
In the step (2), a coprecipitate is obtained from the above-mentioned coprecipitate slurry. The step (2) may be carried out by any methods as long as the coprecipitate can be obtained. However, from the viewpoint of operability, a method by solid-liquid separation such as filtration is preferably used. The coprecipitate can be obtained also by a method of heating the coprecipitate slurry by, for example, spray drying so as to volatilize the liquid.
In the step (2), when the coprecipitate is obtained by solid-liquid separation, it is preferable that the step (2) be the following step (2').
(2') A step of subjecting the coprecipitate slurry to solid-liquid separation, followed by washing and drying thereof to obtain a coprecipitate.
In the step (2'), when alkali and Cl are excessively present in a solid component obtained after the solid-liquid separation, they can be removed by washing. In a sense of washing the solid component efficiently, it is preferable to

use water as a washing solution. Water-soluble organic solvents such as alcohol and acetone may be added to the washing solution if necessary. Washing may be carried out twice or more, for example, washing with the water-soluble organic solvent may be carried out again after washing with water is carried out.

In the step (2'), the coprecipitate is obtained by drying after washing. Drying is usually carried out by heat treatment, but drying may be carried out by air blow drying, vacuum drying, or the like. When drying is carried out by heat treatment, the heat treatment temperature is usually around from 50°C to 300°C, and preferably around from 100°C to 200°C.

In the step (3), by calcining a mixture obtained by mixing the coprecipitate obtained as mentioned above, and a lithium compound, and an inactive flux if necessary, a lithium nickel manganese composite metal oxide is obtained. Examples of the lithium compound may include one or more anhydrides and/or one or more hydrates selected form the group consisting of lithium hydroxide, lithium chloride, lithium nitrate and lithium carbonate. As the inactive flux, an agent that is not easily reacted with a raw material of the lithium composite metal oxide in calcination is preferably used. Examples of the inactive flux include chlorides such as NaCl, KCl, and $NH_4Cl$, fluorides such as NaF, KF, and $HN_4F$, and boric acid. A preferable example may be the chloride. When the inactive flux is further mixed in the step (3), the reactivity of the mixture in calcination is enhanced, and the particle diameter of the primary particle, the particle diameter of the secondary particle and the BET specific surface area of the resultant lithium nickel manganese composite metal oxide may be able to be adjusted. Furthermore, two or more kinds of inactive fluxes can be used. The inactive flux may remain in the lithium composite metal oxide after calcination, or removed by washing of the lithium composite metal oxide or evaporation of the inactive flux after calcination.

In the step (3), mixing may be any of dry mixing and wet drying, but from the viewpoint of convenience, dry mixing is preferable. Examples of a mixing device include a stirring mixing machine, a V-type mixing machine, a W-type mixing machine, a ribbon mixing machine, a drum mixer, and a ball mill.

The retention temperature in the calcination is an important factor for adjusting the particle diameter of the primary particle, the particle diameter of the secondary particle, and the specific surface area of the lithium nickel manganese composite metal oxide. In general, as the retention temperature becomes higher, the particle diameter of the primary particle and the particle diameter of the secondary particle tend to become larger, and the specific surface area tends to become smaller. In the step (3), when KCl is used as an inactive flux and calcination is carried out with a temperature retained at, for example, 900°C, the average particle diameter of the resultant lithium nickel manganese composite metal oxide is around 1 μm. The lower the retention temperature is decreased from this retention temperature, the smaller the diameter of the primary particle becomes. It is preferable that the retention temperature be 650°C or more and 850°C or less. The time for retaining the retention temperature is usually 0.1 to 20 hours, and is preferably 0.5 to 8 hours. The temperature rising rate to the retention temperature is usually from 50°C/hour to 400°C/hour, and the temperature decreasing rate from the retention temperature to the room temperature is usually from 10°C/hour to 400°C/hour. Furthermore, examples of the calcination atmosphere include air, oxygen, nitrogen, argon, or a mixture gas thereof, and the air atmosphere is preferable.

The lithium nickel manganese composite metal oxide obtained after the calcination may be pulverized by a ball mill or a jet mill. Pulverization may allow the BET specific surface area of the lithium nickel manganese composite metal oxide to be adjusted. Furthermore, pulverization and calcination may be repeated twice or more. The lithium nickel manganese composite metal oxide can be washed or classified if necessary.

<Electrically Conductive Material in the Present Invention>

In the electrode mixture of the present invention, the electrically conductive material plays a role of enhancing the electrical conductivity of the resultant electrode. Examples of the electrically conductive material may include a carbonaceous material. More specifically, the examples thereof include graphite powder, carbon black (for example, acetylene black), and fibrous carbonaceous materials (carbon nanotube, carbon nanofiber, vapor phase growth carbon fiber, and the like).

<Overcharge Inhibition Material in the Present Invention>

In the present invention, the overcharge inhibition material is decomposed and/or polymerized by the voltage when the resultant nonaqueous electrolyte secondary battery is in an overcharge state. As a result, a film is formed on the surface of the electrode or the surface of the materials constituting the electrode. This film formation allows an abnormal operation of the secondary battery to be inhibited. The overcharge inhibition material is preferably an aromatic compound. Two or more kinds of overcharge inhibition materials may be used. When the electric potential at which Li atom in Li metal is changed into an ion is defined as a reference, the electric potential at which the overcharge inhibition material is decomposed and/or polymerized is a potential of 4.5 V or more with respect to the reference (0 V).

A more preferable overcharge inhibition material in the electrode mixture of the present invention is one or

more members selected from the group consisting of an aramid, a polyether, a polysulfone and a polyethersulfone. These may be represented by the following formula (2):

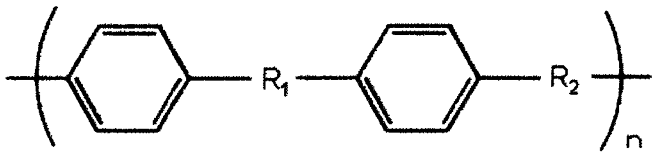

(2)

wherein $R_1$ and $R_2$ denote, independently for each occurrence, one selected from the group consisting of C=O-NH, O and $SO_2$, and n is 3 or more and 100000 or less.

In the formula (2), n is preferably 100 or more and 50000 or less, and more preferably 1000 or more and 30000 or less.

<Binder / Organic Solvent in Electrode Mixture>

The electrode mixture of the present invention may further include a binder or an organic solvent or both. When the electrode mixture includes a binder or an organic solvent or both, the application property of the electrode mixture onto the electrode collector, and binding property can be improved. Furthermore, when the electrode mixture includes a binder or an organic solvent or both, the viscosity of the electrode mixture is preferably 2000 mPa·s or more and 10000 mPa·s or less, and more preferably 4000 mPa·s or more and 6000 mPa·s or less. The viscosity is measured by using a rotary viscometer, at a measurement temperature of 25°C, and rotation number of 10 rpm. As the rotary viscometer, a Cone/Plate viscometer manufactured by Brookfield can be used. The adjustment of the viscosity may be carried out by controlling the amount of the organic solvent to be used.

Examples of the binder include a thermoplastic resin, more specifically, polyvinylidene fluoride (hereinafter, may be also referred to as PVdF), thermoplastic polyimide, carboxymethylcellulose, polyethylene, and polypropylene. Furthermore, examples of the organic solvent include amine solvents such as N,N-dimethylaminopropylamine and diethylenetriamine, ether solvents such as tetrahydrofuran, ketone solvents such as methyl ethyl ketone, ester solvents such as methyl acetate and amide solvents such as dimethylacetamide and N-methyl-2-pyrrolidone.

<Method of Producing Electrode Mixture>

The electrode mixture can be obtained by mixing the lithium nickel manganese composite metal oxide, the electrically conductive material, the overcharge inhibition material, and the binder and/or organic solvent to be used if necessary. For the mixing, a stirrer, a disperser or a kneader, which are usually industrially used, can be used.

<Electrode of the Present Invention>

The electrode of the present invention includes the electrode mixture of the present invention. The electrode of the present invention can be obtained by applying the electrode mixture of the present invention onto the electrode collector, and drying thereof. The dried electrode may be subjected to pressing treatment.

Examples of the electrode collector include Al, Ni, and stainless steel. From the viewpoint that processing into a thin film is easily carried out and the cost is low, Al is preferable. Examples of a method of applying the electrode mixture onto the electrode collector include a slit die coating method, a screen coating method, a curtain coating method, a knife coating method, a gravure coating method, and an electrostatic spray method. Drying may be carried out at around from 20°C to 150°C.

<Nonaqueous Electrolyte Secondary Battery of the Present Invention>

The nonaqueous electrolyte secondary battery of the present invention includes a positive electrode, a negative electrode capable of being doped and dedoped with lithium ions, a separator and a nonaqueous electrolytic solution. The positive electrode is an electrode of the present invention. The electrode of the present invention acts as the positive electrode in the nonaqueous electrolyte secondary battery.

The nonaqueous electrolyte secondary battery can be produced as follows by using the electrode of the present invention, that is, the positive electrode of the nonaqueous electrolyte secondary battery. More specifically, an electrode group obtained by laminating or laminating and winding the separator, the negative electrode, and the positive electrode

is accommodated in a battery case such as a battery can, and then, a nonaqueous electrolytic solution is filled in the case. Thus, a nonaqueous electrolyte secondary battery can be produced.

Examples of the shape of the electrode group include a shape whose cross section in the direction perpendicular to the axis of winding of the electrode group is circle, ellipse, rectangle, and rounded rectangle. Furthermore, examples of shapes of the battery include a paper shape, a coin shape, a cylindrical shape, and a square shape.

<Nonaqueous Electrolyte Secondary Battery of the Present Invention - Negative Electrode>

The negative electrode may be any negative electrode as long as it is capable of being doped and dedoped with lithium ions at a lower electric potential than that of the positive electrode, and examples thereof include an electrode obtained by allowing a negative electrode collector to support a negative electrode mixture containing a negative electrode material, or an electrode composed of a simple substance of a negative electrode material. Examples of the negative electrode material include a carbonaceous material, chalcogen compounds (oxides, sulfides, and the like), nitrides, and a material that is a metal or alloy capable of being doped and dedoped with lithium ions at a lower electric potential than that of the positive electrode. Furthermore, two kinds or more of the negative electrode material may be mixed and used.

Examples of the negative electrode material are described below. Specific examples of the carbonaceous material include graphite such as natural graphite and artificial graphite, cokes, carbon black, thermal decomposition carbons, carbon fiber, and an organic macromolecule calcined product. Specific examples of the oxide include oxides of silicon represented by the formula $SiO_x$ (herein, x denotes a positive real number) such as $SiO_2$ and SiO; oxides of titanium represented by the formula $TiO_x$ (herein, x denotes a positive real number) such as $TiO_2$ and TiO; oxides of vanadium represented by the formula $VO_x$ (herein, x denotes a positive real number) such as $V_2O_5$ and $VO_2$; oxides of iron represented by the formula $FeO_x$ (herein, x denotes a positive real number) such as $Fe_3O_4$, $Fe_2O_3$ and FeO; oxides of tin represented by the formula $SnO_x$ (herein, x denotes a positive real number) such as $SnO_2$ and SnO; oxides of tungsten represented by the formula $WO_x$ (herein, x denotes a positive real number) such as $WO_3$ and $WO_2$; and composite metal oxides containing lithium and titanium and/or vanadium, such as $Li_4Ti_5O_{12}$, and $LiVO_2$ (for example, $Li_{1.1}V_{0.9}O_2$). Specific examples of the sulfide include sulfides of titanium represented by the formula $TiS_x$ (herein, x denotes a positive real number) such as $Ti_2S_3$, $TiS_2$ and TiS; sulfides of vanadium represented by the formula $VS_x$ (herein, x denotes a positive real number) such as $V_3S_4$, $VS_2$ and VS; sulfides of iron represented by the formula $FeS_x$ (herein, x denotes a positive real number) such as $Fe_3S_4$, $FeS_2$ and FeS; sulfides of molybdenum represented by the formula $MoS_x$ (herein, x denotes a positive real number) such as $Mo_2S_3$ and $MoS_2$; sulfides of tin represented by the formula $SnS_x$ (herein, x denotes a positive real number) such as $SnS_2$ and SnS; sulfides of tungsten represented by the formula $WS_x$ (herein, x denotes a positive real number) such as $WS_2$; sulfides of antimony represented by the formula $SbS_x$ (herein, x denotes a positive real number) such as $Sb_2S_3$; and sulfides of selenium represented by the formula $SeS_x$ (herein, x denotes a positive real number) such as $Se_5S_3$, $SeS_2$, and SeS. Specific examples of the nitride include lithium-containing nitrides such as $Li_3N$, $Li_{3-x}A_xN$ (herein, A is Ni and/or Co, and x satisfies $0 < x < 3$). Such carbonaceous materials, oxides, sulfides, and nitrides may be used in combination of two or more thereof. They may be crystalline or noncrystalline. Furthermore, these carbonaceous materials, oxides, sulfides, and nitrides are mainly used as an electrode in a state in which they are supported on the negative electrode collector.

Furthermore, specific examples of the metal include lithium metal, silicon metal, and tin metal. Furthermore, examples of the alloy include lithium alloys such as Li-Al, Li-Ni and Li-Si, silicon alloys such as Si-Zn, and tin alloys such as Sn-Mn, Sn-Co, Sn-Ni, Sn-Cu, and Sn-La, and further include alloys such as $Cu_2Sb$ and $La_3Ni_2Sn_7$. Such metals and alloys are mainly used singly as an electrode (for example, they are used in a foil shape).

From the viewpoint that the electric potential flatness is high, the average discharge electric potential is low, and the cycling characteristic is good in the resultant battery, a carbonaceous material mainly including graphite such as natural graphite and artificial graphite is preferably used among the above-mentioned negative electrode materials. Examples of the shape of the carbonaceous material include a flake shape like natural graphite, a spherical shape like mesocarbon microbeads, a fibrous shape like graphitized carbon fiber, and an aggregated body of fine powders.

The negative electrode mixture may include a binder or an organic solvent or both. As the binder and the organic solvent, materials that are the same as those in the positive electrode are employed. A method for producing the negative electrode mixture is also the same method as the method for the positive electrode.

The negative electrode can be produced by applying the negative electrode mixture onto the negative electrode collector, and drying thereof. The dried negative electrode may be subjected to press treatment. Examples of the negative electrode collector may include Cu, Ni, and stainless steel. Cu is preferably used because it does not easily form an alloy with lithium and it is easily processed into a thin film. The negative electrode mixture is applied onto the negative electrode collector by the same method as mentioned above, and examples of the method include a slit die coating method, a screen coating method, a curtain coating method, a knife coating method, a gravure coating method, and an electrostatic spray method. Drying may be carried out at around from 20°C to 150°C.

<Nonaqueous Electrolyte Secondary Battery of The Present Invention - Separator>

As the separator, it is possible to use a member having a form of a porous film, non-woven fabric, woven fabric, and the like, made of, for example, polyolefin resins such as polyethylene and polypropylene, a fluorocarbon resin, and a nitrogen-containing aromatic polymer. The separator may be made of two or more kinds of the materials, and the members may be laminated. Examples of the separator include separators described in JP 2000-30686 A and JP 10-324758 A. From the viewpoint that the volume energy density is increased and the internal resistance is reduced in a battery, the thickness of the separator is made to be thin as long as the mechanical strength thereof can be maintained. The thickness of the separator is usually around from 5 to 200 $\mu$m, and preferably around from 5 to 40 $\mu$m.

The separator preferably has a porous film containing a thermoplastic resin. The separator is disposed between the positive electrode and the negative electrode. It is preferable in the nonaqueous electrolyte secondary battery that the separator have a function of preventing the flowing of an excessive amount of electric current by blocking an electric current (shutdown) when an abnormal electric current flows in a battery due to short-circuit between the positive electrode and the negative electrode. Herein, the shutdown is carried out by obstructing micropores of the porous film of the separator when the temperature exceeds the usual temperature for use. Then, it is preferable that the film should not be broken in the battery by the temperature and the shutdown state is maintained after shutdown, even if the temperature inside the battery is increased to some extent. As the separator, a laminated film including a porous film and a heat resistant porous layer laminated thereon can be used. When the film is used as the separator, the heat resistance of the secondary battery of the present invention can be enhanced. The heat resistant porous layer may be laminated on both surfaces of the porous film.

<Nonaqueous Electrolyte Secondary Battery of the Present Invention - Separator - Laminated Film>

Hereinafter, a laminated film including the porous film and the heat resistant porous layer laminated thereon is described.

In the laminated film, the heat resistant porous layer has higher heat resistance than the porous film. The heat resistant porous layer may be made of an inorganic powder, or may contain a heat-resistant resin. When the heat resistant porous layer contains a heat-resistant resin, the heat resistant porous layer can be formed by easy techniques such as coating. Examples of the heat-resistant resin include polyamide, polyimide, polyamide-imide, polycarbonate, polyacetal, polysulfone, polyphenylene sulfide, polyether ketone, aromatic polyester, polyether sulfone, and polyether imide. From the viewpoint of enhancing the heat resistance, polyamide, polyimide, polyamide-imide, polyether sulfone, and polyether imide are preferable; and polyamide, polyimide, and polyamide-imide are more preferable. Further preferable examples thereof include nitrogen-containing aromatic polymers such as aromatic polyamides (para-oriented aromatic polyamide and meta-oriented aromatic polyamide), aromatic polyimide, and aromatic polyamide-imide; and among them, preferable examples thereof include aromatic polyamide (aramid). Para-oriented aromatic polyamide (hereinafter, may be also referred to as para-aramid) is particularly preferable in the production aspect. As the heat-resistant resin, poly-4-methyl pentene-1 and a cyclic olefin polymer can be used. When such heat-resistant resins are used, the heat resistance of the laminated film, that is, the thermal film breaking temperature of the laminated film can be further enhanced. When a nitrogen-containing aromatic polymer is used among the heat-resistant resins, depending upon the polarity of the molecule, excellent compatibility with respect to the electrolytic solution may be achieved, and the liquid-retaining property of the electrolytic solution in the heat resistant porous layer may be improved. Thus, in the production of the nonaqueous electrolyte secondary battery, filling speed of the electrolytic solution is increased, and the charge and discharge capacity of the nonaqueous electrolyte secondary battery is also enhanced.

The thermal film breaking temperature of the laminated film depends upon the kinds of the heat-resistant resins, and it is selected and used according to the place of use and the purpose of use. More specifically, the thermal film breaking temperature can be controlled to around 400°C when the nitrogen-containing aromatic polymer is used as the heat-resistant resin, to around 250°C when poly-4-methyl pentene-1 is used as the heat-resistant resin, and to around 300°C when the cyclic olefin polymer is used as the heat-resistant resin, respectively. When the heat resistant porous layer is made of an inorganic powder, the thermal film breaking temperature may be able to be controlled to, for example, around 500°C or more.

The para-aramid is obtained by condensation polymerization of para-oriented aromatic diamine and para-oriented aromatic dicarboxylic acid halide, and is substantially composed of a repeating unit in which an amide bond is bound at the para-position or orientation position according to the para-position of the aromatic ring (for example, an orientation position extending coaxially or parallel in the reverse direction, such as 4,4'-biphenylene, 1,5-naphthalene, and 2,6-naphthalene). Specific examples thereof include para-aramids having a para-oriented structure or a structure corresponding to the para-oriented structure, such as poly(paraphenylene terephthalamide), poly(parabenzamide), poly (4,4'-benzanilide terephthalamide), poly(paraphenylene-4,4'-biphenylene dicarboxylic acid amide), poly(paraphenylene-2,6-naphthalene dicarboxylic acid amide), poly(2-chloro-paraphenylene terephthalamide), and a paraphenylene terephthalamide/2,6-dichloroparaphenylene terephthalamide copolymer.

The aromatic polyimide is preferably wholly aromatic polyimide produced by condensation polymerization of aromatic diacid anhydride and diamine. Specific examples of the diacid anhydride include pyromellitic acid dianhydride, 3,3',4,4'- diphenyl sulfone tetracarboxylic acid dianhydride, 3,3',4,4'-benzophenonetetracarboxylic acid dianhydride, 2,2'-bis(3,4-dicarboxyphenyl)hexafluoro propane, and 3,3',4,4'-biphenyltetracarboxylic acid dianhydride. Specific examples of the diamine include oxydianiline, paraphenylendiamine, benzophenone diamine, 3,3'-methylenedianiline, 3,3'-diaminobenzophenone, 3,3'-diaminodiphenyl sulfone, and 1,5'-naphthalene diamine. Furthermore, polyimide that is soluble to a solvent can be suitably used. Examples of such a polyimide include polyimide of a polycondensate of 3,3', 4,4'-diphenyl sulfone tetracarboxylic acid dianhydride and aromatic diamine.

Examples of the aromatic polyamide-imide include a product obtained by condensation polymerization of aromatic dicarboxylic acid and aromatic diisocyanate, and a product obtained by condensation polymerization of aromatic diacid anhydride and aromatic diisocyanate. Specific examples of aromatic dicarboxylic acid include isophthalic acid, and terephthalic acid. Furthermore, specific examples of the aromatic diacid anhydride include trimellitic acid anhydride. Specific examples of aromatic diisocyanate include 4,4'-diphenyl methane diisocyanate, 2,4-tolylenediisocyanate, 2,6-tolylenediisocyanate, orthotolylane diisocyanate, and m-xylene diisocyanate.

From the viewpoint of enhancing ionic permeability, the thickness of the heat resistant porous layer is preferably thin, and specifically, the thickness is 1 μm or more and 10 μm or less, further preferably 1 μm or more and 5 μm or less, and particularly preferably 1 μm or more and 4 μm or less. Furthermore, the heat resistant porous layer has micropores, and the pore size (diameter) thereof is usually 3 μm or less, and preferably 1 μm or less. When the heat resistant porous layer contains the heat-resistant resin, the heat resistant porous layer may further contain the filler explained later.

In the laminated film, it is preferable that the porous film have micropores and have a shutdown function. In this case, the porous film contains a thermoplastic resin. The size of the micropore in the porous film is usually 3 μm or less, and preferably 1 μm or less. The porosity of the porous film is usually 30 to 80% by volume, and preferably 40 to 70% by volume. In the nonaqueous electrolyte secondary battery, when the temperature exceeds the usual temperature for use, the porous film containing a thermoplastic resin can obstruct the micropores by the softening of the thermoplastic resin constituting the porous film.

As the thermoplastic resin, any thermoplastic resin can be selected as long as it is not dissolved in the electrolytic solution in the nonaqueous electrolyte secondary battery. Specific examples thereof include polyolefin resins such as polyethylene and polypropylene, and thermoplastic polyurethane resins, and a mixture of two or more thereof may be used. From the viewpoint of the shutdown by softening thereof at a lower temperature, it is preferable that the porous film contain polyethylene. Specific examples of the polyethylene include low-density polyethylene, high-density polyethylene, and linear polyethylene, and also include polyethylene having an ultrahigh molecular weight, that is, molecular weight of one million or more. From the viewpoint of enhancing the puncture strength of the porous film, the thermoplastic resin constituting the film preferably contains polyethylene having an ultrahigh molecular weight. In the aspect of production of a porous film, the thermoplastic resin may preferably contain a wax made of polyolefin having a low molecular weight (weight-average molecular weight: 10000 or less) in some cases.

The thickness of the porous film in the laminated film is usually 3 μm to 30 μm, and further preferably 3 μm to 25 μm. In the present invention, the thickness of the laminated film is usually 40 μm or less, and preferably 20 μm or less. It is preferable that the value of A/B be 0.1 or more and 1 or less, where the thickness of the heat resistant porous layer is A (μm) and the thickness of the porous film is B (μm).

When the heat resistant porous layer contains the heat-resistant resin, the heat resistant porous layer may contain one or more filler. The filler may be one or more selected from any of an organic powder, an inorganic powder and a mixture thereof. It is preferable that particles constituting the filler have an average particle diameter of 0.01 μm or more and 1 μm or less.

Examples of the organic powder include powders made of organic substances such as copolymers of single or two or more of styrene, vinyl ketone, acrylonitrile, methyl methacrylate, ethyl methacrylate, glycidyl methacrylate , glycidyl acrylate, methyl acrylate, and the like; fluorine-containing resins such as polytetrafluoroethylene, an ethylene tetrafluoride-propylene hexafluoride copolymer, an ethylene tetrafluoride-ethylene copolymer, and polyvinylidene fluoride; a melamine resin; a urea resin; polyolefin; and polymethacrylate. These organic powders may be used singly or in mixture of two or more thereof. Among these organic powders, from the viewpoint of the chemical stability, a polytetrafluoroethylene powder is preferable.

Examples of the inorganic powder include powders made of inorganic substances such as metal oxide, metal nitride, metal carbide, metal hydroxide, carbonate, and sulfate. Among them, powders made of an inorganic substance having low conductivity are preferably used. Specific examples thereof include powders made of alumina, silica, titanium dioxide, or calcium carbonate. The inorganic powders may be used singly or in mixture of two or more thereof. Among these inorganic powders, from the viewpoint of the chemical stability, alumina powder is preferable. More preferably, all the particles constituting the filler are alumina particles, and more preferably, all the particles constituting the filler are

alumina particles and part or entire part thereof is alumina particles having a substantially spherical shape. When the heat resistant porous layer is formed of inorganic powders, the above-exemplified inorganic powder may be used, and a binder may be mixed therewith and used if necessary.

The content of the filler when the heat resistant porous layer contains the heat-resistant resin, although depending upon the specific gravity of the material of the filler, the weight of the filler is usually 5 or more and 95 or less, preferably 20 or more and 95 or less, and furthermore preferably 30 or more and 90 or less with respect to the total weight of 100, in the case where all the particles constituting the filler are alumina particles. Such ranges can be appropriately set according to the specific gravity of the material of the filler.

The example of the shape of the particles constituting the filler includes substantially a spherical shape, a plate shape, a columnar shape, a needle shape, a whisker shape, and a fibrous shape, and particles having any shapes can be used. Since uniform pores can be formed easily, substantially spherical particles are preferable. The substantially spherical particles include particles having an aspect ratio (particle major axis / particle minor axis) of 1 or more and 1.5 or less. The aspect ratio of the particles can be measured by electron micrograph.

In the secondary battery, from the viewpoint of ionic permeability, the separator has an air permeability according to the Gurley method of preferably 50 to 300 seconds/100 cc, and more preferably 50 to 200 seconds/100 cc. Furthermore, the porosity of the separator is usually 30 to 80% by volume, and preferably 40 to 70% by volume. The separator may be obtained by laminating separators having different porosity.

<Nonaqueous Electrolyte Secondary Battery of the Present Invention - Nonaqueous Electrolytic Solution>

In the secondary battery, a nonaqueous electrolytic solution usually contains electrolyte and an organic solvent. Examples of the electrolyte include lithium salts such as $LiClO_4$, $LiPF_6$, $LiAsF_6$, $LiSbF_6$, $LIBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (herein, BOB denotes bis(oxalato)borate), lower aliphatic lithium carboxylate salt and $LiAlCl_4$. A mixture of two or more thereof may be used. Usually, among them, one or more fluorine-containing lithium salt selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$.

Examples of the organic solvent in the electrolytic solution include carbonates such as propylene carbonate, ethylene carbonate, dimethyl carbonate, diethyl carbonate, ethyl methyl carbonate, 4-trifluoromethyl-1,3-dioxolane-2-one, and 1,2-di(methoxy carbonyloxy)ethane; ethers such as 1,2-dimethoxyethane, 1,3-dimethoxy propane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, and the organic solvent into which a fluorine substituent has been introduced. Mixed solvents made of two or more thereof are usually used. Among them, a mixed solvent made of carbonates is preferable, and a mixed solvent made of cyclic carbonate and non-cyclic carbonate, or a mixed solvent made of cyclic carbonate and ethers are more preferable. As the mixed solvent made of cyclic carbonate and noncyclic carbonate, a mixed solvent containing ethylene carbonate, dimethyl carbonate and ethyl methyl carbonate are preferable because the operation temperature range is wide, a load property is excellent and even when the materials such as natural graphite and artificial graphite are used for the active materials of the negative electrode, they are not easily decomposed. Because a particularly excellent safety improvement effect is obtained, it is preferable to use an electrolytic solution having an organic solvent including a fluorine-containing lithium salt such as $LiPF_6$ and a fluorine substituent. A mixed solvent containing ethers having a fluorine substituent such as pentafluoropropyl methyl ether and 2,2,3,3-tetrafluoropropyl difluoromethyl ether and dimethyl carbonate is more preferable because it is excellent in the rate property.

The nonaqueous electrolytic solution may contain an overcharge inhibition material. The overcharge inhibition material contained in the nonaqueous electrolytic solution is preferably an aromatic compound, and more preferably one or more selected from a diphenyl ether, a derivative of a diphenyl ether, a diphenyl sulfone and a derivative of a diphenyl sulfone. Also, these can be represented by the following formula (3).

Formula (3):

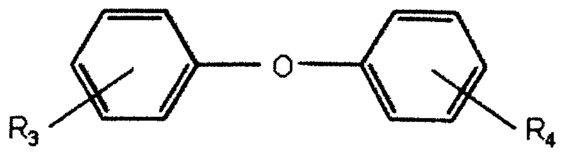

(3)

wherein $R_3$ and $R_4$ denote, independently for each occurrence, one selected from the group consisting of H, $CH_3$ and $C-CH_3$.

<Nonaqueous Electrolyte Secondary Battery of the Present Invention - Solid Electrolyte>

Instead of the electrolytic solution, a solid electrolyte may be used. Examples of the solid electrolyte include organic macromolecule electrolytes such as a polyethylene oxide macromolecule, a macromolecule including at least one of a polyorganosiloxane chain or a polyoxyalkylene chain. It is possible to use a so-called gel-type electrolyte in which the macromolecule is allowed to retain a nonaqueous electrolytic solution. An inorganic solid electrolyte including sulfides such as $Li_2S-SiS_2$, $Li_2S-GeS_2$, $Li_2S-P_2S_5$, $Li_2S-B_2S_3$, $Li_2S-SiS_2-Li_3PO_4$, and $Li_2S-SiS_2-Li_2SO_4$ may be used. The use of such solid electrolytes may enhance the safety. When the solid electrolyte is used in the nonaqueous electrolyte secondary battery of the present invention, the solid electrolyte may function as a separator, and in this case, a separator may not be necessary.

## EXAMPLE

Next, the present invention is described in more detail with reference to examples. Evaluation of a lithium nickel manganese composite metal oxide was carried out by the following measurement.

1. Powder X-Ray Diffraction Measurement of Lithium Nickel Manganese Composite Metal Oxide

The powder X-ray diffraction measurement of a lithium nickel manganese composite metal oxide was made by a RINT 2500 TTR model manufactured by Rigaku Corporation. Specifically, the measurement was made by filling the lithium composite metal oxide in a dedicated substrate and by using a CuK$\alpha$ radiation source at a diffraction angle 2$\theta$ ranging from 10° to 90° to obtain a powder X-ray diffraction pattern.

2. Measurement of BET Specific Surface Area

After 1 g of powder (for example, lithium nickel manganese composite metal oxide) was dried at 150°C under a nitrogen atmosphere for 15 minutes, the BET specific surface area was measured using Flowsoab II2300 manufactured by Micrometrix Corporation.

3. Analysis of Composition

Powder (for example, lithium nickel manganese composite metal oxide) was dissolved in hydrochloric acid, and by using this solution, the composition analysis of the powder was carried out by an induction coupling plasma emission analysis method (SPS 3000, hereinafter may be also referred to as ICP-AES).

4. SEM Observation

SEM observation of particles was made using a scanning electron microscope (JSM-5510, manufactured by JEOL Ltd.) by placing particles constituting the powder (for example, lithium nickel manganese composite metal oxide) on an electrically conductive sheet attached on a sample stage, and by irradiating them with an electron beam having an acceleration voltage of 20 kV. The average particle diameter was obtained by selecting arbitrary 50 particles from an image (SEM photograph) obtained by the SEM observation, measuring particle diameters of respective particles, and calculating the average value thereof.

(Production of Lithium Nickel Manganese Composite Metal Oxide)

In a polypropylene beaker, 200 ml of distilled water was placed. To this, 83.88 g of potassium hydroxide was added. This was stirred to dissolve potassium hydroxide and prepare an aqueous solution of potassium hydroxide (an alkaline aqueous solution). Into a glass beaker, 200 ml of distilled water was placed, and 15.68 g of nickel (II) chloride hexahydrate, 13.66 g of manganese (II) chloride tetrahydrate, and 2.982 g of iron (II) chloride tetrahydrate were added and stirred, thereby dissolving thereof to obtain a nickel-manganese-iron mixed aqueous solution. While stirring the potassium hydroxide aqueous solution, the nickel-manganese-iron mixed aqueous solution was added dropwise. Thus, a coprecipitate was formed and a coprecipitate slurry was obtained. Then, the coprecipitate slurry was filtered and washed with distilled water. The resultant solid content was dried at 100°C to obtain a coprecipitate $P_1$. The average particle diameter of the primary particles by SEM observation of $P_1$ was 0.05 μm, and the BET specific surface area was 63 $m^2/g$. As a result of the composition analysis of $P_1$, the molar ratio of Ni : Mn : Fe was 0.44 : 0.46 : 0.10.

By dry mixing, 2.0 g of the coprecipitate ($P_1$) and 1.16 g of lithium hydroxide monohydrate were mixed using an agate mortar to obtain a mixture. Then, the mixture was placed in an alumina calcination container, followed by calcining at 800°C under an air atmosphere for 6 hours with an electric furnace and cooling thereof to room temperature to obtain a calcined product. A pulverized product obtained by pulverizing the calcined product was washed by decantation using distilled water, followed by filtration to obtain a solid content. The resultant solid content was dried at 100°C for 8 hours to obtain a lithium nickel manganese composite metal oxide (positive electrode active material).

As a result of the analysis of the composition of the lithium nickel manganese composite metal oxide, it was found that the molar ratio of Li : Ni : Mn : Fe was 1.21 : 0.44 : 0.46 : 0.10. Also, the BET specific surface area of the lithium nickel manganese composite metal oxide was 8.0 $m^2/g$. The average particle diameter of the primary particles by SEM observation was 0.2 μm. Furthermore, as a result of the powder X-ray diffraction measurement, it was found that the lithium nickel manganese composite metal oxide has a crystal structure belonging to an R-3m space group.

(Preparation of Binder Solution)

By using polyvinylidene fluoride (PVdF) as the binder and using N-methyl-2-pyrrolidone (NMP) as the organic solvent, the binder was dissolved in an organic solvent to prepare a binder solution. Herein, 10 parts by weight of PVdF was dissolved in 90 parts by weight of NMP.

(Preparation of Overcharge Inhibition Material Solution 1)

As an overcharge inhibition material 1, aramid was used. To 90 parts by weight of NMP as the organic solvent, 10 parts by weight of aramid was dissolved to prepare the overcharge inhibition material solution 1.

(Preparation of Overcharge Inhibition Material Solution 2)

As an overcharge inhibition material 2, polyethersulfone (PES) was used. To 90 parts by weight of NMP as the organic solvent, 10 parts by weight of PES was dissolved to prepare the overcharge inhibition material solution 2.

(Preparation of Electrode 1)

The lithium nickel manganese composite metal oxide obtained above was used. Eighty-five parts by weight of the oxide, 10 parts by weight of the electrically conductive material (a mixture of acetylene black and graphite at the weight ratio of 9 : 1), 4 parts by weight of the binder, 1 part by weight of the overcharge inhibition material and 45 parts by weight of NMP were mixed and kneaded, and NMP was further added, so that the viscosity was adjusted to 5000 mPa·s to obtain an electrode mixture 1. This electrode mixture 1 was applied onto both surfaces of an electrode collector made of aluminum foil having a thickness of 15 μm by the doctor blade method. This was dried at 60°C for 2 hours, and further dried under vacuum at 150°C for 10 hours so as to volatilize NMP, followed by rolling thereof. The applied amount of the electrode mixture after drying was 15.0 $mg/cm^2$. In this way, an electrode 1 in which the electrode mixture was applied onto the electrode collector was obtained.

(Preparation of Electrode 2)

An electrode 2 was obtained in the same manner as for the electrode 1 except that 3 parts by weight of the binder and 2 parts by weight of the overcharge inhibition material 1 were used.

(Preparation of Electrode 3)

An electrode 3 was obtained in the same manner as for the electrode 1 except that the overcharge inhibition material 2 was used instead of the overcharge inhibition material 1.

(Preparation of Electrode 4)

An electrode 4 was obtained in the same manner as for the electrode 2 except that the overcharge inhibition material 2 was used instead of the overcharge inhibition material 1.

(Preparation of Electrode 5)

An electrode 5 was obtained in the same manner as for the electrode 1 except that 5 parts by weight of the binder was used and the overcharge inhibition material was not used.

The details of the electrodes 1 to 5 are shown in Table 1.

Table 1

| Electrode | Positive electrode active material | Electrically conductive material | Binder | Overcharge inhibition material | Types of overcharge inhibition material |
|---|---|---|---|---|---|
| Electrode 1 | 85 parts by weight | 10 parts by weight | 4 parts by weight | 1 part by weight | Aramid |
| Electrode 2 | 85 parts by weight | 10 parts by weight | 3 parts by weight | 2 parts by weight | Aramid |
| Electrode 3 | 85 parts by weight | 10 parts by weight | 4 parts by weight | 1 part by weight | PES |
| Electrode 4 | 85 parts by weight | 10 parts by weight | 3 parts by weight | 2 parts by weight | PES |
| Electrode 5 | 85 parts by weight | 10 parts by weight | 5 parts by weight | 0 part by weight | - |

(Preparation of Negative Electrode)

As a negative electrode material, a carbonaceous material (MCMB manufactured by Osaka Gas Chemicals Co., Ltd.) having an average particle diameter of 10 μm was used. By using this material and the binder solution described above, 90 parts by weight of the negative electrode material and 10 parts by weight of the binder were mixed and kneaded. To the resultant mixture, NMP was added to adjust the viscosity to 5000 mPa·s to obtain a negative electrode mixture. This negative electrode mixture was applied onto both surfaces of an electrode collector made of copper foil having a thickness of 10 μm by the doctor blade method. This was dried at 60°C for 2 hours, and further dried under vacuum at 150°C for 10 hours so as to volatilize NMP, followed by rolling thereof. The applied amount of the electrode mixture after drying was 7.5 mg/cm$^2$. In this way, a negative electrode in which the negative electrode mixture was applied onto the electrode collector was obtained.

(Preparation of Nonaqueous Electrolytic Solution 1)

Ethylene carbonate (EC), dimethyl carbonate (DMC) and ethyl methyl carbonate (EMC) were mixed at the ratio of EC : DMC : EMC = 30 : 35 : 35 (volume ratio) to obtain a mixed solvent. $LiPF_6$ was added and dissolved in the mixed solvent so that the concentration was 1 mol/liter. Thus, a nonaqueous electrolytic solution 1 was prepared.

(Preparation of Nonaqueous Electrolytic Solution 2)

To 100 parts by weight of the nonaqueous electrolytic solution 1, 5 parts by weight of diphenyl ether as the overcharge inhibition material was added to prepare a nonaqueous electrolytic solution 2.

(Preparation of Nonaqueous Electrolytic Solution 3)

To 100 parts by weight of the nonaqueous electrolytic solution 1, 20 parts by weight of diphenyl ether as the overcharge inhibition material was added to prepare a nonaqueous electrolytic solution 3.

(Preparation of Nonaqueous Electrolyte Secondary Battery 1)

The electrode 1 was used as a positive electrode. The positive electrode and a negative electrode were laminated and wound with a separator, which was made of a polypropylene porous film, disposed therebetween so as to prepare an electrode group having a battery size length of 62 mm, a width of 35 mm, and a thickness of 3.6 mm. This was accommodated in a battery case made of an aluminum laminate film, the nonaqueous electrolytic solution 1 was filled therein, and the upper part of the battery case was thermally sealed. Thus, a battery 1 was prepared.

(Preparation of Nonaqueous Electrolyte Secondary Battery 2)

A battery 2 was obtained in the same manner as for the battery 1 except that the electrode 2 was used as the positive electrode.

(Preparation of Nonaqueous Electrolyte Secondary Battery 3)

A battery 3 was obtained in the same manner as for the battery 1 except that the electrode 3 was used as the positive electrode.

(Preparation of Nonaqueous Electrolyte Secondary Battery 4)

A battery 4 was obtained in the same manner as for the battery 1 except that the electrode 4 was used as the positive electrode.

(Preparation of Nonaqueous Electrolyte Secondary Battery 5)

A battery 5 was obtained in the same manner as for the battery 1 except that the electrode 5 was used as the positive electrode.

(Preparation of Nonaqueous Electrolyte Secondary Battery 6)

A battery 6 was obtained in the same manner as for the battery 1 except that the electrolytic solution 2 was used instead of the electrolytic solution 1.

(Preparation of Nonaqueous Electrolyte Secondary Battery 7)

A battery 7 was obtained in the same manner as for the battery 5 except that the electrolytic solution 2 was used instead of the electrolytic solution 1.

(Preparation of Nonaqueous Electrolyte Secondary Battery 8)

A battery 8 was obtained in the same manner as for the battery 5 except that the electrolytic solution 3 was used instead of the electrolytic solution 1.

The details of the nonaqueous electrolyte secondary batteries 1 to 8 are shown in Table 2.

Table 2

| Battery | Overcharge inhibition material in electrode | Positive electrode | Electrolytic solution |
|---|---|---|---|
| Battery 1 | Aramid | Electrode 1 | Electrolytic solution 1 |
| Battery 2 | Aramid | Electrode 2 | Electrolytic solution 1 |
| Battery 3 | PES | Electrode 3 | Electrolytic solution 1 |
| Battery 4 | PES | Electrode 4 | Electrolytic solution 1 |

(continued)

| Battery | Overcharge inhibition material in electrode | Positive electrode | Electrolytic solution |
|---|---|---|---|
| Battery 5 | - | Electrode 5 | Electrolytic solution 1 |
| Battery 6 | Aramid | Electrode 1 | Electrolytic solution 2 |
| Battery 7 | - | Electrode 5 | Electrolytic solution 2 |
| Battery 8 | - | Electrode 5 | Electrolytic solution 3 |

(Initial Capacity of Nonaqueous Electrolyte Secondary Battery)

The prepared batteries 1 to 8 were allowed to stand at room temperature for 10 hours, and the batteries were sufficiently impregnated with an electrolytic solution. Next, these batteries were constant-current charged to 4.2V at room temperature at 0.2 C rate, and then constant-voltage charged at 4.2 V for 8 hours. Thus, initial charge was carried out. After the initial charge, constant-current discharge for discharging at 0.2 C rate to 3.0 V was carried out, and the initial discharge capacity was measured. It was confirmed that the initial discharge capacity of the batteries 1, 2, 3, 4 and 6 obtained by using the electrode mixture having the overcharge inhibition material were the same level as that of the battery 5.

(Evaluation of Output Characteristics of Nonaqueous Electrolyte Secondary Battery)

To the batteries 1 to 8 that had undergone the initial charge and discharge, constant-current and constant-voltage charge was carried out by constant-current charging the batteries to 4.2 V at room temperature at 0.2 C rate and then constant-voltage charging the batteries at 4.2 V for 8 hours, and then constant-current discharge was carried out to 3.0 V at 10C rate. Thus, these batteries were evaluated for the output characteristics. As a result, it was found that the output characteristics of the batteries 1, 2, 3, 4 and 6 using the electrode mixture having the overcharge inhibition material were the same level as those of the battery 5. Furthermore, the output characteristics of the battery 8 were reduced as compared with those of the batteries 1 to 6. The output characteristics were evaluated by the following formula.

$$\text{Discharge capacity maintenance rate (\%)} = \text{Discharge capacity at 10 C rate} / \text{Initial discharge capacity} \times 100$$

(Overcharge Test)

The batteries 1 to 8 that had undergone the initial charge and discharge were charged at a constant current at the rate 2C at room temperature, and the batteries were charged with 200% capacity of the initial discharge capacity. No swelling was observed in the batteries 1, 2, 3, 4, 6 and 8 while swelling of about 2 mm was observed in the center part of the battery 7 and swelling of 5 mm was observed in the center part of the battery 5. It is assumed that the swelling is due to the decomposition reaction of the electrolytic solution by overcharge.

Production Example (Production of Laminated Film)

(1) Production of Coating Fluid

In 4200 g of NMP, 272.7 g of calcium chloride was dissolved, and, then, to the solution, 132.9 g of paraphenylendiamine was added and completely dissolved. To the resultant solution, 243.3 g of terephthalic acid dichloride was gradually added to be polymerized so as to obtain para-aramid. The resultant para-aramid was further diluted with NMP to obtain a para-aramid solution (A) having a concentration of 2.0% by weight. To 100 g of the resultant para-aramid solution, 2 g of alumina powder (a) (alumina C manufactured by Nippon Aerosil Co., Ltd., average particle diameter: 0.02 μm) and 2 g of alumina powder (b) (Sumicorundum, AA03 manufactured by Sumitomo Chemical Co., Ltd., average particle diameter: 0.3 μm) were added as a filler in a total amount of 4 g and mixed, the resultant mixture was treated by using a nanomizer three times, further filtered through a 1000-mesh wire net, and de-foamed under reduced pressure so as to produce a coating slurry (B). The weight of the aluminum powder (filler) with respect to the total weight of the para-aramid and the alumina powder was 67% by weight.

(2) Production and Evaluation of Laminated Film

As the porous film, a porous film made of polyethylene (film thickness: 12 μm, air permeability: 140 seconds/100 cc, average particle diameter: 0.1 μm, and porosity: 50%) was used. The porous film made of polyethylene was fixed on a PET film having a thickness of 100 μm, and the coating slurry (B) was applied onto the porous film by using a bar-coater manufactured by TESTER SANGYO CO., LTD. While the PET film and the coated porous film were integrated, they were immersed in water as a poor solvent, a para-aramid porous film (heat resistant porous layer) was precipitated, and the solvent was then dried to obtain a laminated film 1 in which a heat resistant porous layer and a porous film were laminated. The thickness of the laminated film 1 was 16 μm, and the thickness of the para-aramid porous film (heat resistant porous layer) was 4 μm. The air permeability of the laminated film 1 was 180 seconds/100 cc, and the porosity was 50%. When the cross section of the heat resistant porous layer of the laminated film 1 was observed by a scanning electron microscope (SEM), it was found that relatively small micropores of around from 0.03 μm to 0.06 μm and relatively large micropores of around from 0.1 μm to 1 μm were included. The evaluation of the laminated film was carried out by the following method.

<Evaluation of Laminated Film>

(A) Measurement of Thickness

The thickness of the laminated film and the thickness of the porous film were measured according to JIS (K7130-1992). Furthermore, as the thickness of the heat resistant porous layer, a value obtained by subtracting the thickness of the porous film from the thickness of the laminated film was used.

(B) Measurement of Air Permeability by Gurley Method

The air permeability of the laminated film was measured by using a digital timer type GURLEY TYPE DENSOMETER manufactured by YASUDA SEIKI SEISAKUSHO,LTD. according to JIS P8117.

(C) Porosity

A sample of the resultant laminated film was cut into a 10 cm × 10 cm square to measure the weight W (g) and the thickness D (cm) of the cut film. The weight (Wi (g)) of each layer in the sample was determined and the volume of each layer was determined from Wi and the true specific gravity (true specific gravity: i (g/cm$^3$)) of the material of each layer, thereby obtaining the porosity (% by volume) from the following formula.

$$\text{Porosity (vol\%)} = 100 \times \{1-(W1/\text{true specific gravity } 1 + W2 / \text{true specific gravity } 2 + \dots + Wn / \text{true specific gravity } n) / (10 \times 10 \times D)\}$$

In the batteries 1, 2, 3, 4 and 6, when the same laminated film as that of Production Example is used as the separator, the thermal film breaking is prevented, and it is possible to obtain a nonaqueous electrolyte secondary battery that can withstand overcharge.

**Industrial Applicability**

When an electrode mixture of the present invention is used for a positive electrode of a nonaqueous electrolyte secondary battery, it is possible to obtain a nonaqueous electrolyte secondary battery capable of inhibiting an abnormal operation without damaging high-power characteristics. The nonaqueous electrolyte secondary battery is extremely useful particularly for application of use that requires high power at a high current rate, that is, for power tools of machine tools and automobiles, and the like.

## Claims

1. An electrode mixture comprising a lithium nickel manganese composite metal oxide having an average particle diameter of 1 μm or less, an electrically conductive material and an overcharge inhibition material.

2. The electrode mixture according to claim 1, wherein the lithium nickel manganese composite metal oxide is represented by the following formula (1):

$$Li_z(Ni_{1-(x+y)}Mn_xM_y)O_2 \qquad (1)$$

wherein, x is more than 0 and less than 1, y is 0 or more and less than 1, x+y is more than 0 and less than 1, z is 0.5 or more and 1.5 or less; M is one or more elements selected from the group consisting of Co, Al, B, Ti, Mg and Fe.

3. The electrode mixture according to claim 1 or 2, wherein the overcharge inhibition material is an aromatic compound.

4. The electrode mixture according to any one of claims 1 to 3, wherein the overcharge inhibition material is one or more members selected from the group consisting of an aramid, a polyether, a polysulfone and a polyethersulfone.

5. The electrode mixture according to any one of claims 1 to 4, wherein the electrically conductive material is a carbonaceous material.

6. The electrode mixture according to any one of claims 1 to 5, further comprising a binder or an organic solvent or both.

7. The electrode mixture according to claim 6, wherein the viscosity thereof is 2000 mPa·s or more and 10000 mPa·s or less.

8. An electrode comprising the electrode mixture according to any one of claims 1 to 7.

9. A nonaqueous electrolyte secondary battery comprising a positive electrode, a negative electrode capable of being doped and dedoped with lithium ions, a separator and a nonaqueous electrolytic solution, wherein the positive electrode is the electrode according to claim 8.

10. The nonaqueous electrolyte secondary battery according to claim 9, wherein the nonaqueous electrolytic solution contains an overcharge inhibition material.

11. The nonaqueous electrolyte secondary battery according to claim 10, wherein the overcharge inhibition material contained in the nonaqueous electrolytic solution is an aromatic compound.

12. The nonaqueous electrolyte secondary battery according to claim 10 or 11, wherein the overcharge inhibition material contained in the nonaqueous electrolytic solution is one or more members selected from the group consisting of a diphenyl ether, a derivative of a diphenyl ether, a diphenyl sulfone and a derivative of a diphenyl sulfone.

13. The nonaqueous electrolyte secondary battery according to any one of claims 9 to 12, wherein the separator is made of a porous film and a heat resistant porous layer laminated thereon.

**INTERNATIONAL SEARCH REPORT**

International application No. PCT/JP2010/059299

A. CLASSIFICATION OF SUBJECT MATTER
*H01M4/1391*(2010.01)i, *H01M4/131*(2010.01)i, *H01M4/505*(2010.01)i, *H01M4/525*(2010.01)i, *H01M4/62*(2006.01)i, *H01M10/052*(2010.01)i, *H01M10/0567*(2010.01)i

According to International Patent Classification (IPC) or to both national classification and IPC

B. FIELDS SEARCHED

Minimum documentation searched (classification system followed by classification symbols)
H01M4/1391, H01M4/131, H01M4/505, H01M4/525, H01M4/62, H01M10/052, H01M10/0567

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-268206 A (Sony Corp.), 29 September 2005 (29.09.2005), claims 1 to 15; paragraphs [0008] to [0015], [0018], [0038], [0039], [0043], [0054] to [0061] (Family: none) | 1-13 |
| Y | JP 2009-99418 A (Hitachi Vehicle Energy, Ltd.), 07 May 2009 (07.05.2009), claims 1, 3 & US 2009/0104517 A1 & EP 2051319 A2 & CN 101414675 A | 1-13 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 August, 2010 (20.08.10) | 31 August, 2010 (31.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/059299

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-258187 A (Hitachi, Ltd., Hitachi Metals, Ltd., Shin-Kobe Electric Machinery Co., Ltd.), 04 October 2007 (04.10.2007), claims 1, 5 (Family: none) | 1-13 |
| Y | JP 2008-84825 A (Sumitomo Chemical Co., Ltd.), 10 April 2008 (10.04.2008), claims 1, 3 & US 2009/0104531 A1 & EP 2026389 A1 & WO 2007/123246 A1 & KR 10-2009-0005186 A & CN 101427403 A | 1-13 |
| Y | WO 2002/73718 A1 (Yuasa Corp.), 19 September 2002 (19.09.2002), claims 4, 5 & JP 2009-59710 A & JP 2009-59711 A & JP 4320548 B & EP 1372202 A1 & TW 560098 B | 2,3 |
| Y | JP 2002-50345 A (Mitsubishi Chemical Corp.), 15 February 2002 (15.02.2002), paragraphs [0015], [0024], [0029] (Family: none) | 3 |
| Y | JP 2006-286650 A (Mitsubishi Chemical Corp.), 19 October 2006 (19.10.2006), paragraphs [0029], [0030] & JP 2004-111359 A | 10-12 |
| Y | JP 2006-24380 A (Mitsubishi Chemical Corp.), 26 January 2006 (26.01.2006), paragraphs [0039], [0040] (Family: none) | 10-12 |
| Y | JP 2007-005242 A (Mitsubishi Chemical Corp.), 11 January 2007 (11.01.2007), paragraphs [0055] to [0059] (Family: none) | 10-12 |
| Y | JP 2008-307893 A (Sumitomo Chemical Co., Ltd.), 25 December 2008 (25.12.2008), claims 1, 6, 7 & EP 2151322 A1 & WO 2008/140124 A1 & CN 101678662 A & KR 10-2010-0021448 A | 13 |
| Y<br>A | JP 2009-32655 A (Sumitomo Chemical Co., Ltd.), 12 February 2009 (12.02.2009), claim 10 & EP 2174915 A & WO 2009/005164 A1 & KR 10-2010-0037599 A | 13<br>4 |

Form PCT/ISA/210 (continuation of second sheet) (July 2009)

**INTERNATIONAL SEARCH REPORT**

International application No.
PCT/JP2010/059299

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2007-200795 A (Matsushita Electric Industrial Co., Ltd.),<br>09 August 2007 (09.08.2007),<br>claim 1<br>& US 2007/0190404 A1 | 13<br>4 |
| Y | JP 2003-7303 A (Sony Corp.),<br>10 January 2003 (10.01.2003),<br>entire text<br>(Family: none) | 1-13 |
| A | JP 2005-332650 A (Matsushita Electric Industrial Co., Ltd.),<br>02 December 2005 (02.12.2005),<br>entire text<br>(Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7302614 A
- JP 9106835 A
- JP 2000030686 A
- JP 10324758 A